# EUROPÄISCHE PATENTSCHRIFT

(11) **EP 1 852 284 B1**
(45) Veröffentlichungstag und Bekanntmachung des Hinweises auf die Patenterteilung: **03.06.2009**
(21) Anmeldenummer: 07006209.6
(22) Anmeldetag: 27.03.2007
(51) Int. Cl.: B60G 17/015, B60G 17/016, B62D 53/06, B62D 61/12

(54) **Verfahren zur Verkleinerung des Wendekreises von Nutzfahrzeugen**
Method for reducing the turning circle of commercial vehicles
Procédé de réduction du rayon de braquage de véhicules utilitaires

(30) Priorität: 06.05.2006 DE 102006021211; 14.03.2007 DE 102007012242
(43) Veröffentlichungstag der Anmeldung: 07.11.2007
(60) Teilanmeldung: 09004824.0
(73) Patentinhaber: WABCO GmbH, 30453 Hannover (DE)
(72) Erfinder: Glavinic, Andelko, 30161 Hannover (DE); Risse, Rainer, 30982 Pattensen-Reden (DE); Schoppe, Michael, 30163 Hannover (DE); Schrader, Christian, 31228 Peine (DE); Stender, Axel, 31787 Hameln (DE)

(56) Entgegenhaltungen:
- WO-A-20/07050014
- DE-A1- 4 442 488
- DE-A1- 19 718 258
- JP-A- 8 169 366
- JP-A- 9 323 578
- JP-A- 2002 205 524
- US-A- 5 630 625
- US-B1- 6 240 339

## Beschreibung

Die Erfindung bezieht sich auf ein Verfahren zur Verkleinerung des Wendekreises von Nutzfahrzeugen gemäß dem Oberbegriff des Patentanspruchs 1.

Für Nutzfahrzeuge, insbesondere für Sattelzüge mit Zugfahrzeug und Sattelanhänger, aber auch für normale LKWs sowie für Anhänger ist es wichtig, dass der Wendekreis möglichst gering ausfällt. Ein derartiger kleiner Wendekreis erleichtert das Rangieren in engen Speditions-Höfen sowie das Durchfahren enger Kurven im Straßenverkehr. Das Problem zu großer Wendekreise tritt besonders auf bei Fahrzeugen mit großem Radstand sowie bei Fahrzeugen mit mehreren Hinterachsen. Bei derartigen Fahrzeugen besteht die Gefahr, dass beim Durchfahren enger Kurven an der Innenseite der Kurve stehende Hindernisse berührt werden können.

Es ist bereits bekannt, zur Verkleinerung des Wendekreisesdie hinterste Achse von Sattelzügen als Lenkachse auszubilden (DE 35 25 027 A1). Hierdurch lässt sich der Wendekreis verkleinern bzw. die Abnutzung der Reifen der letzten Achse verringern. Eine Ausführung der letzten Achse als Lenkachse ist jedoch aufwendig und teuer.

Weiter ist auch bekannt, die vordere oder die letzte Achse des Hinterachs-Aggregats als Liftachse auszubilden, wodurch im gelifteten Zustand eine Abnutzung der Reifen dieser Achse ganz unterbleibt. Ein derartiges Liften einzelner Achsen ist natürlich nur dann möglich, wenn das Fahrzeug nicht voll beladen ist, sondern nur im Teillastbereich fährt. Anderenfalls würden die verbleibenden Achsen überlastet.

Aus der DE 10 2004 010 561 A1 ist weiter ein Verfahren zur Anfahrhilfesteuerung für Sattelzüge bekannt, bei welchem die vorletzte Achse des Anhängefahrzeugs durch den Fahrer entlastet, und somit die letzte Achse zusätzlich belastet werden kann. Hierdurch wird auch die Belastung der Antriebsachse des Zugfahrzeuges erhöht, wodurch das Anfahren, insbesonder auf glatter Straße, erleichtert wird. Dabei darf die Entlastung der vorletzten Achse natürlich nur so weit gehen, dass die letzte Achse nicht überlastet wird. Belastungen und Entlastungen einzelner Achse erfolgen dabei durch Belüftung bzw. Entlüftung der zugehörigen Luftfederbälge. Einen Hinweis auf Kurvenradien des Fahrzeugs enthält diese Schrift nicht.

Aus der US-B1-6,240,339 ist ein Verfahren und eine Anordnung bekannt, bei dem selektiv die Last der Räder der hintersten Achse eines Anhängers vermindert wird, um hiermit den effektiven Radstand des Anhängers zu verkürzen. Hierdurch soll ein Aus-der-Spur-Laufen des Anhängers während einer Kurvenfahrt reduziert werden. Die Achslastverlagerung erfolgt innerhalb bestimmter Geschwindigkeitsgrenzen und innerhalb bestimmter Kurvenradien. Sobald das Fahrzeug wieder mit höherer Geschwindigkeit auf gerader Straße fährt, wird die Achslastverlagerung wieder zurückgenommen.

Schließlich ist aus der JP 2002/205524 A ebenfalls ein Anhänger eines Nutzfahrzeugs bekannt, bei dem zum einen ein minimaler Kurvenradius möglich ist, um eine Kurve besser durchfahren zu können, zweitens die Abnutzung der Reifen reduziert ist und drittens diese Bedingungen in einfacher und sicherer Weise realisiert werden können. Hierzu kann die hinterste Achse vertikal zwischen einer unteren Position und einer gelifteten Position bewegt werden. Dies erfolgt durch eine entsprechende Be- und Entlüftung von Luftfedern, welche zwischen dem Fahrzeug und den Achsen angeordnet sind.

Der Erfindung liegt die Aufgabe zugrunde, durch einfache, kostengünstige Mittel bei einem Nutzfahrzeug den Wendekreis verkleinern zu können.

Diese Aufgabe wird durch die im Patentanspruch 1 enthaltene Erfindung gelöst. Die Unteransprüche enthalten zweckmäßige Weiterbildungen.

Die Erfindung wird im folgenden anhand einer Zeichnung näher erläutert. Diese zeigt in
- Fig. 1: eine schematische Darstellung eines Sattelzuges, bestehend aus Zugwagen und Sattelanhänger;
- Fig. 2: eine schematische Darstellung des Hinterachs-Aggregates des Sattelanhängers aus Fig. 1.

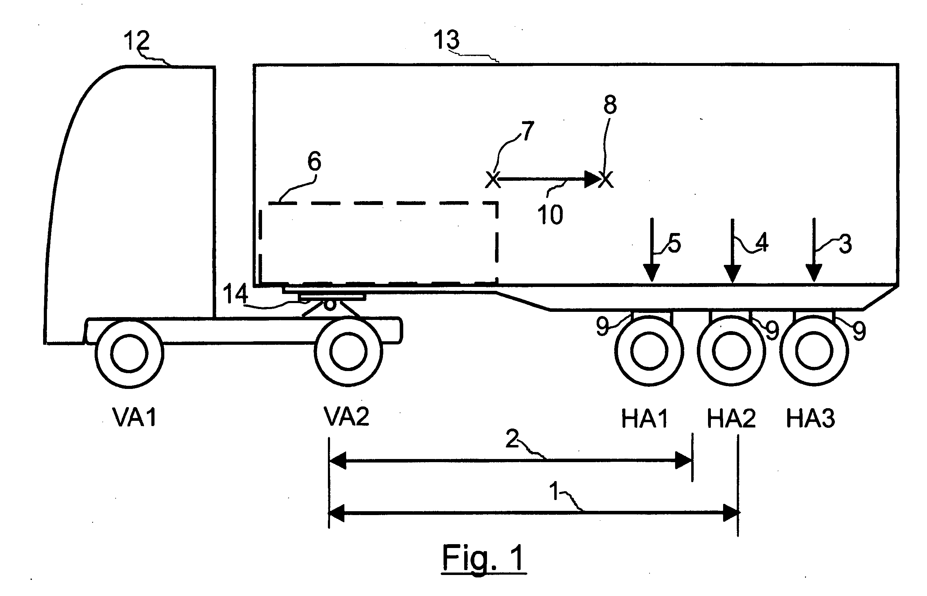

Der in Fig. 1 dargestellte Sattelzug besteht aus einem Zugwagen (12) und einem Sattelanhänger (13). Der Zugwagen (12) besitzt zwei Achsen, die hier als VA1 und VA2 bezeichnet sind. Davon ist die VA1 (VA=Vorderachse) lenkbar.

Über einen Königszapfen (14) ist an den Zugwagen (12) der Sattelanhänger (13) mit den drei Hinterachsen (HA1, HA2 und HA3) angekoppelt. Die genannten Hinterachsen sind mit dem Anhänger (13) über Luftfederbälge (9) verbunden. Die Luftfederbälge (9) sind, wie weiter unten erläutert wird, mittels Druckluft belüftbar und entlüftbar. Hierdurch können bekannterweise das Niveau des Anhängers sowie die Federungseigenschaften eingestellt werden. Bekannt ist auch, einzelne Hinterachsen als Liftachsen auszubilden, welche bei Bedarf zur Schonung der zugehörigen Reifen gänzlich angehoben werden können, so dass die Reifen keinen Straßenkontakt mehr aufweisen.

Maßgeblich für einen gewünschten engen Kurvenradius ist der Radstand des Sattelanhängers (13). Dieser muß für einen engen Wendekreis möglichst kurz sein. Bei einer normalen, gleichmäßigen Belastung aller drei Hinterachsen des Anhängers ergibt sich für die Fig. 1 ein mittlerer Radstand des Anhängers, der hier mit (1) bezeichnet ist, und etwa dem Radstand der HA2 entspricht. Der Radstand(1) reicht vom Königszapfen (14) bis etwa zur zweiten Hinterachse HA2.

Zur Verringerung des effektiven Radstandes wird die Last der letzten Achse (HA3) (siehe Pfeil 3) verringert bzw. zum Teil auf die beiden davorliegenden Hinterachsen (HA1, HA2) verlagert (siehe Pfeile (5, 4)). Hierdurch ergibt sich ein verringerter effektiver Radstand (2) des Anhängers (13) und damit ein verkleinerter Wendekreis. Der Radstand (2) reicht nun vom Königszapfen bis etwa zur Mitte zwischen HA1 und HA2.

Die Verlagerung der Achslast nach vorne erfolgt in der Absicht, den Wendekreis des Sattelzuges zu verringern. Sie wird vorteilhaft dann aktiviert, wenn ein besonders kleiner Wendekreis erforderlich ist.

Die Kurvenerkennung erfolgt erfindungsgemäß durch das Vorhandensein eines Blinkersignals. Dies hat den Vorteil das die Achslastverlagerung und damit die Verringerung des Wendekreises besonders frühzeitig, schon vor dem Durchfahren der Kurve, vorgenommen werden kann. Das Blinkersignal wird dabei einer Steuerelektronik (nicht dargestellt) über einen Bus oder über eine externe Leitung mitgeteilt.

Zweckmässig erfolgt die Verlagerung der Achlast nur bis zu einer dadurch verursachten Grenz-Überlastung der davorliegenden Hinterachsen (HA1, HA2). Die Höhe dieser Grenz-Überlastung beträgt etwa 130%. Eine derartige Überlastung ist bei kurzzeitigem Betrieb zugelassen.

Die automatische Aktivierung der Funktion kann dann erfolgen, wenn das Fahrzeug langsamer als eine Grenzgeschwindigkeit fährt. Dabei wird davon ausgegangen, dass ein Durchfahren enger Kurven langsam erfolgt. Die Grenzgeschwindigkeit kann dabei zweckmäßig etwa bei 30 km/h liegen. In der Praxis beträgt die Grenzgeschwindigkeit 35 bis 25 km/h.

Es ist aber auch möglich, die Aktivierung der Funktion der Achslastverlagerung von dem Durchfahren einer Kurve abhängig zu machen. Dabei kann eine Kurve bekanntlich z.B. durch unterschiedliche Geschwindigkeiten der linken und rechten Vorderräder des Fahrzeugs erkannt werden. Es ist aber auch möglich, die Radgeschwindigkeiten der linken und rechten Räder einer der Hinterachsen (HA1, HA2, HA3) auszuwerten.

Zweckmässig muß zur Kurvenerkennung ein vorbestimmter Kurvenradius über eine vorbestimmte Zeit erkannt werden. Dabei sind sowohl der Radius als auch die Zeit parametrierbar, dh. vom Fahrzeughersteller oder von anderen nach Wunsch vorgebbar oder veränderbar.

Bei beladenem Fahrzeug kann die erfindungsgemäße Verlagerung der Achslast natürlich nur soweit erfolgen, dass die davorliegenden (HA1, HA2) nicht unzulässig überlastet werden. Dabei müssen die gesetzlichen Vorschriften eingehalten werden. Zweckmäßig erfolgt die Verlagerung der Achslast deshalb nur bis zu einer Grenz-Überlastung der davorliegenden Hinterachsen. Diese Grenz-Überlastung kann zweckmäßig etwa 130 Prozent betragen. Praktische Überlastungen liegen in einem Bereich von 135 bis 125 Prozent.

Zweckmäßig ist weiter, dass bei Überschreiten bzw. bei Fahrten oberhalb der oben genannten Grenzgeschwindigkeit bei einem teilbeladenen Fahrzeug die letzte Hinterachse (HA3) soweit entlastet wird, dass sich an der ersten bzw. zweiten Hinterachse (HA1, HA2) ein Balgdruck von jeweils 100 Prozent einstellt. Wie nachfolgend erläutert wird, ergibt sich neben einem verringerten Wendekreis dadurchdadurch zusätzlich eine Entlastung des Königszapfens (14). Die Höhe der Beladung kann durch bekannte Verfahren ermittelt werden, z. B. durch Beobachtung des Beschleunigungsverhaltens des Fahrzeugs.

Wie in der Fig. 1 schematisch eingezeichnet ist, kann das Fahrzeug derart ungünstig bzw. ungleichmäßig beladen sein, dass eine Last (6) ganz vorne, also über dem Königszapfen (14), abgestellt ist. Hierdurch ergibt sich ein Schwerpunkt (7) des Anhängers (13). Durch die oben erwähnte zweckmäßige Entlastung der letzten Hinterachse (HA3) erfolgt nun eine Verschiebung des Anhängerschwerpunktes um eine Strecke (10) nach hinten an die Stelle (8). Hierdurch ergibt sich infolge der veränderten Hebelverhältnisse der Vorteil, dass sich die Belastung des Königszapfens (14) bzw. der zweiten Vorderachse (VA2) verringert, wodurch sich die Reifenabnutzung der zweiten Vorderachse verringert und sich damit die gesamte Reifenabnutzung vergleichmäßigt. Ebenfalls wird verhindert, dass durch die beschriebene ungünstige Beladung des Sattelanhängers möglicherweise die zulässige Achslast der zweiten Vorderachse (VA2) des Fahrzeugs überschritten wird.

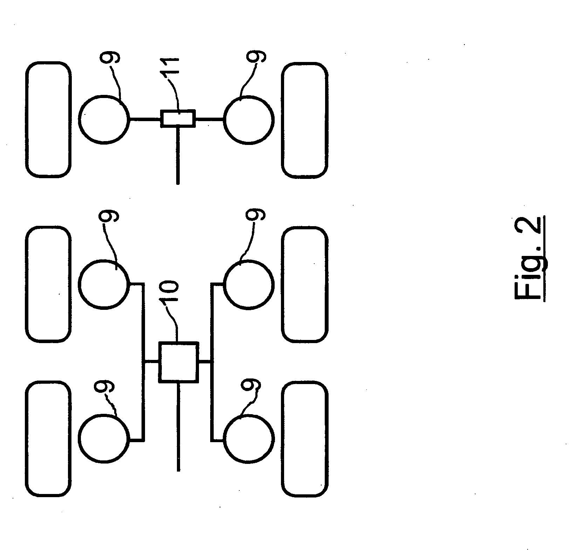

In der Fig. 2 ist zum besseren Verständnis das Hinterachs-Aggregat des Sattelanhängers der Fig. 1 in der Draufsicht dargestellt. Wie man erkennt, sind die drei Hinterachsen (HA1 bis HA3) durch jeweils zwei Federbälge (9) pro Achse abgefedert. Der Luftdruck in den Federbälgen (9) kann durch Zufuhr bzw. Abfuhr von Druckluft reguliert werden. Hierzu weist die letzte Hinterachse (HA3) ein sogenanntes Liftachsventil (11) auf, durch welches diese letzte Hinterachse nicht nur entlastet, sondern sogar ganz abgehoben werden kann. Die beiden vorderen Hinterachsen (HA1 und HA2) werden durch ein gemeinsames Luftfederventil (10) versorgt, welches ebenfalls eine Regulierung der Luftfederdrücke erlaubt. Die genannten Ventile (10, 11) sind an (nicht dargestellte) Luftvorratsbehälter angeschlossen. Zur erfindungsgemäßen Achslastverlagerung von der hintersten Hinterachse (HA3) auf die beiden vorderen Hinterachsen (HA1, HA2) wird, wie oben beschrieben, über das Liftachsventil (11) die Belastung der letzten Hinterachse (HA3) soweit verringert, bis sich an den beiden anderen Hinterachsen HA1, HA2 eine Belastung von jeweils 100 Prozent einstellt.

Wie oben erwähnt, kann sowohl die letzte Achse (HA3) als auch die vordere Achse (HA1) des Hinterachs-Aggregats als Liftachse ausgebildet sein. Zweckmässig wird bei Fahrzeugen mit vorderer Liftachse bei einer Kurvenfahrt unterhalb der Grenzgeschwindigkeit diese Achse automatisch abgesenk, sofern sie vorher geliftet war. Anschliessend wird die Belastung wie oben beschrieben eingeregelt, maximal bis zu einer Grenzüberlastung dieser Achse.

Die Erfindung ist nicht nur bei dem beispielhaft gezeichneten Sattelzug anwendbar, sondern auch bei normalen LKWs mit zwei oder drei Hinterachsen sowie bei normalen Anhängern mit ebenfalls zwei oder drei Hinterachsen.

## Patentansprüche

1. Verfahren zur Verkleinerung des Wendekreises von Nutzfahrzeugen mit mindestens einer Vorderachse (VA1, VA2) und mindestens zwei Hinterachsen (HA1, HA2, HA3), mit einer absichtlichen Verlagerung der Achslast der letzten Hinterachse (HA3) auf die davorliegenden Hinterachsen (HA1, HA2), wobei die Verlagerung der Achslast der letzten Hinterachse automatisch erfolgt,
**dadurch gekennzeichnet, dass**
die automatische Verlagerung der Achslast dann vorgenommen wird, wenn ein Blinkersignal erkannt wird.

2. Verfahren nach Anspruch 1, **dadurch gekennzeichnet, dass** die Verlagerung der Achslast bis zu einer dadurch verursachten Grenz-Überlastung der davorliegenden Hinterachsen (HA1, HA2) erfolgt.

3. Verfahren nach Anspruch 2, **dadurch gekennzeichnet, dass** die Grenz-Überlastung etwa 130% beträgt.

4. Verfahren nach einem oder mehreren der Ansprüche 1 bis 3, **dadurch gekennzeichnet, dass** die automatische Verlagerung der Achslast nur unterhalb einer Grenzgeschwindigkeit des Fahrzeugs erfolgt.

5. Verfahren nach Anspruch 4, **dadurch gekennzeichnet, dass** die Grenzgeschwindigkeit etwa 30 km/h beträgt.

6. Verfahren nach einem oder mehreren der Ansprüche 1 bis 5, **dadurch gekennzeichnet, dass** die automatische Verlagerung der Achslast nur in Kurven erfolgt.

7. Verfahren nach Anspruch 6, **dadurch gekennzeichnet, , dass** eine automatische Kurvenerkennung durch Auswertung der unterschiedlichen Radgeschwindigkeiten der linken und rechten Räder einer der Hinterrachsen (HA1, HA2, HA3) in der Kurve erfolgt.

8. Verfahren nach Anspruch 7, **dadurch gekennzeichnet, dass** zur Kurvenerkennung ein vorbestimmter Kurvenradius über eine vorbestimmte Zeit erkannt werden muß.

9. Verfahren nach Anspruch 8, **dadurch gekennzeichnet, dass** Kurvenradius und Zeit parametrierbar sind.

10. Verfahren nach Anspruch 4, **dadurch gekennzeichnet, dass** bei Überschreitung der Grenzgeschwindigkeit bei einem teilbeladenen Fahrzeug die letzte Hinterachse (HA3) so weit entlastet wird, dass sich an der ersten bzw. zweiten Hinterachse (HA1, HA2) ein Balgdruck von jeweils 100 % einstellt.

11. Verfahren nach Anspruch 1, **dadurch gekennzeichnet, dass** das Blinkersignal einer Steuerelektronik zur Auswertung über einen Bus oder über ein externes Kabel zugeführt wird.

12. Verfahren nach Ansprüch 4, für Fahrzeuge, bei denen die erste Hinterachse (HA1) als Liftachse ausgebildet ist, **dadurch gekennzeichnet, dass** bei einer Kurvenfahrt unterhalb der Grenzgeschwindigkeit diese Achse automatisch abgesenkt wird.

13. Verfahren nach Anspruch 12, **dadurch gekennzeichnet, dass** die Absenkung bis zur Grenzüberlastung dieser Achse erfolgt.

## Claims

1. Method of reducing the turning circle of commercial vehicles having at least one forward axle (VA1, VA2) and at least two rear axles (HA1, HA2, HA3), with intentional displacement of the axle load of the last rear axle (HA3) onto the rear axles (HA1, HA2) located forwardly thereof, the displacement of the axle load of the last rear axle taking place automatically,
**characterized in that**
the automatic displacement of the axle load is carried out when a direction indicator signal is detected.

2. Method according to claim 1, **characterized in that** the displacement of the axle load is effected up to a maximum overloading of the rear axles (HA1, HA2) located forwardly thereof, which overloading is brought about by the displacement.

3. Method according to claim 2, **characterized in that** the maximum overloading is about 130 %.

4. Method according to one or more of claims 1 to 3, **characterized in that** automatic displacement of the axle load is effected only below a boundary speed of the vehicle.

5. Method according to claim 4, **characterized in that** the boundary speed is about 30 km/h.

6. Method according to one or more of claims 1 to 5, **characterized in that** the automatic displacement of the axle load is effected only on bends.

7. Method according to claim 6, **characterized in that** automatic bend detection is effected by evaluation of the different wheel speeds of the left-hand and right-hand wheels of one of the rear axles (HA1, HA2, HA3) on the bend.

8. Method according to claim 7, **characterized in that**, to detect a bend, a predetermined bend radius has to be detected over a predetermined time.

9. Method according to claim 8, **characterized in that** bend radius and time are parameterizable.

10. Method according to claim 4, **characterized in that** when the boundary speed is exceeded in the case of a partially laden vehicle, the last rear axle (HA3) is relieved of load to such an extent that a bellows pressure of 100 % is established at each of the first and second rear axles (HA1, HA2).

11. Method according to claim 1, **characterized in that** the direction indicator signal is supplied by way of a bus or by way of an external cable to a control electronics system for evaluation.

12. Method according to claim 4 for vehicles in which the first rear axle (HA1) is in the form of a lifting axle, **characterized in that** when a bend is negotiated at below the boundary speed, that axle is automatically lowered.

13. Method according to claim 12, **characterized in that** the lowering is effected up to the maximum overloading of that axle.

## Revendications

1. Procédé pour réduire le rayon de braquage de véhicules utilitaires comprenant au moins un essieu avant (VA1, VA2) et au moins deux essieux arrière (HA1, HA2, HA3), le procédé englobant un transfert ou déport intentionnel de la charge d'essieu du dernier essieu arrière (HA3) vers les essieux arrière (HA1, HA2) situés devant le dernier, le transfert ou déport de la charge d'essieu du dernier essieu arrière s'effectuant automatiquement,
**caractérisé en ce que** le transfert ou déport automatique de la charge d'essieu est effectué dans le cas d'une identification d'un signal de clignotant.

2. Procédé selon la revendication 1, **caractérisé en ce que** le transfert ou déport de la charge d'essieu est effectué jusqu'à une surcharge limite ainsi engendrée sur les essieux arrière (HA1, HA2) situés au-devant.

3. Procédé selon la revendication 2, **caractérisé en ce que** la surcharge limite est d'une valeur d'environ 130%.

4. Procédé selon l'une ou plusieurs des revendications 1 à 3, **caractérisé en ce que** le transfert ou déport automatique de la charge d'essieu ne s'effectue qu'en dessous d'une vitesse limite du véhicule.

5. Procédé selon la revendication 4, **caractérisé en ce que** la vitesse limite est d'une valeur d'environ 30 km/h.

6. Procédé selon l'une ou plusieurs des revendications 1 à 5, **caractérisé en ce que** le transfert ou déport automatique de la charge d'essieu ne s'effectue que dans les virages ou courbes.

7. Procédé selon la revendication 6, **caractérisé en ce qu'**une identification automatique de courbe ou de virage est effectuée par traitement des différentes vitesses de roue des roues de droite et de gauche de l'un des essieux arrière (HA1, HA2, HA3) dans la courbe ou le virage.

8. Procédé selon la revendication 7, **caractérisé en ce que** pour l'identification de courbe ou de virage, il est nécessaire d'identifier un rayon de courbe prédéterminé pendant un temps prédéterminé.

9. Procédé selon la revendication 8, **caractérisé en ce que** le rayon de courbe et le temps sont paramétrables.

10. Procédé selon la revendication 4, **caractérisé en ce que** lors du dépassement de la vitesse limite dans le cas d'un véhicule chargé partiellement, le dernier essieu arrière (HA3) est déchargé d'une manière telle qu'il s'établisse sur le premier et respectivement le deuxième essieu arrière (HA1, HA2), une pression de soufflet de ressort pneumatique de respectivement 100%.

11. Procédé selon la revendication 1, **caractérisé en ce que** le signal de clignotant est transmis à une électronique de commande pour traitement, par l'intermédiaire d'un bus ou par l'intermédiaire d'un câble externe.

12. Procédé selon la revendication 4, pour véhicules dont le premier essieu arrière (HA1) est réalisé en tant qu'essieu relevable, **caractérisé en ce que** lors d'une circulation en courbe ou virage en dessous de la vitesse limite, cet essieu est automatiquement abaissé.

13. Procédé selon la revendication 12, **caractérisé en ce que** l'abaissement s'effectue jusqu'à la surcharge limite de cet essieu.
